**Europäisches Patentamt**

**European Patent Office**

**Office européen des brevets**

(19)

(11) Veröffentlichungsnummer: **0 327 611 B1**

(12) **EUROPÄISCHE PATENTSCHRIFT**

(45) Veröffentlichungstag der Patentschrift: **23.12.92**

(21) Anmeldenummer: **88905691.7**

(22) Anmeldetag: **07.07.88**

(86) Internationale Anmeldenummer:
**PCT/DE88/00423**

(87) Internationale Veröffentlichungsnummer:
**WO 89/01377 (23.02.89 89/05)**

(51) Int. Cl.5: **B23D 79/00**, C08J 9/38,
B22D 29/00, //G01F17/00

(54) **VERFAHREN ZUM BESTIMMEN DER MENGE EINES IN EINE BEARBEITUNGSKAMMER FÜR MATERIALIEN EINZUBRINGENDEN EXPLOSIVEN GASGEMISCHES.**

(30) Priorität: **08.08.87 DE 3726475**

(43) Veröffentlichungstag der Anmeldung:
**16.08.89 Patentblatt 89/33**

(45) Bekanntmachung des Hinweises auf die
Patenterteilung:
**23.12.92 Patentblatt 92/52**

(84) Benannte Vertragsstaaten:
**CH DE FR GB IT LI**

(56) Entgegenhaltungen:
**EP-A- 0 050 726**
**FR-A- 2 593 911**
**US-A- 4 024 744**

**Soviet Engineering Research, Band 1, Nr. 9, September 1981 (Melton Mowbrav, Leicestershire, GB), G.G. Gevorkyan et al.: "Thermo-explosive deburring method", Seiten 103-105**

(73) Patentinhaber: **ROBERT BOSCH GMBH**
**Postfach 30 02 20**
**W-7000 Stuttgart 30(DE)**

(72) Erfinder: **WÖHR, Rolf**
**Karlstr. 17**
**W-7250 Leonberg(DE)**

EP 0 327 611 B1

## Beschreibung

Die Erfindung geht aus von einem Verfahren nach der Gattung des Hauptanspruchs. Ein solches Verfahren zum Beseitigen dünner Grate und unerwünschter dünner Kanten und Vorsprünge an Werkstücken erheblich dickeren Querschnitts ist durch die DE-PS 17 52 440 bekannt. Es beruht darauf, daß ein zu behandelndes Werkstück einer plötzlichen, kurzzeitigen Hitzeeinwirkung innerhalb eines definierten und druckdicht abgeschlossenen Raums ausgesetzt wird, die durch Zündung einer vorher bestimmten Menge eines brennbaren Gasgemisches erzeugt wird. Wichtig und entscheidend für das Ergebnis der thermischen Werkstückbehandlung ist neben dem Oberflächen-Volumenverhältnis zwischen Grat und Werkstückgrundkörper sowie der Wärmeleitfähigkeit des Werkstoffes ein möglichst hoher und gleichbleibender Füllgrad der Bearbeitungskammer, d.h. es müssen viele kleine Werkstücke oder ein großes Werkstück, das gerade noch in die Kammer paßt, eingelegt werden. Verfahrenstechnisch ist dabei nur die Summe aller Oberflächen von Interesse. Je mehr sich davon in der Kammer befinden, desto mehr verteilt sich die Wärmemenge.

Der Hitzeschock wird durch Abbrennen eines Brenngas-Sauerstoffgemisches erzeugt, wobei Wasserstoff oder Erdgas bzw. Methan als Brenngas verwendet werden. Zur Steuerung des Entgratprozesses stehen zwei Einflußgrößen zur Verfügung, nämlich die Gasmenge im Brennraum und das Mischungsverhältnis der Gaskomponenten. Diese Einflußgrößen bestimmen die Energiemenge und die Temperatur. Metalle werden in der Regel mit einem Sauerstoffüberschuß entgratet, da sonst nur ein Abschmelzen, aber keine Verbrennung der Grate erfolgen würde.

Bekannte Anlagen zum thermischen Entgraten werden von Hand beschickt, wobei die Werkstücke entweder direkt auf den Schließteller der Bearbeitungskammer aufgelegt oder in einem Topf bzw. einer Werkstückhalterung in die Kammer eingegeben werden. Um eine möglichst wirtschaftliche Verfahrensweise sicherzustellen, werden die Werkstücke zuvor größenmäßig sortiert, das heißt, es werden Werkstückchargen mit zumindest annähernd gleichem Volumen zusammengestellt und diese nacheinander abgearbeitet. Auf diese Weise ist es möglich, die für die betreffende Charge ermittelte und an einer Dosiervorrichtung der Anlage einzustellende Gasgemischmenge solange beizubehalten, bis eine Charge mit anderem Volumen zur Bearbeitung ansteht. Die Ermittlung und Einstellung der zum Entgraten von Werkstücken unterschiedlichen Volumens erforderlichen Gasgemischmenge ist relativ aufwendig und zeitraubend, weshalb die Verkettung thermischer Entgratanlagen mit anderen Werkstück-Bearbeitungsmaschinen in taktmäßig betriebenen Fertigungsstraßen dann auf Schwierigkeiten stößt, wenn größenmäßig unterschiedliche Werkstücke wahllos auf einer Fördereinrichtung, beispielsweise auf einem Transportband, angeliefert werden.

Aus der FR-A-25 93 911 ist bereits ein Verfahren zur Bestimmung des Volumens eines Körpers in einer hermetisch abgeschlossenen Kammer bekannt, bei dem das Volumen durch die Differenz zwischen einem Anfangsdruck und einem definierten Fülldruck der Kammer ermittelt wird.

Aufgabe der Erfindung ist es, eine Anlage zum Behandeln von Materialien mittels Temperatur- und Druckstößen, insbesondere eine thermische Entgratanlage, zu schaffen, die in Abhängigkeit des Volumens der zu behandelnden Materialien die notwendige Menge des explosiven Gasgemisches der Bearbeitungskammer zuführt.

Vorteile der Erfindung

Die erfindungsgemäße Anlage mit den kennzeichnenden Merkmalen des Hauptanspruchs hat den Vorteil, daß nach dem Einbringen eines Werkstücks zunächst dessen Volumen ermittelt und danach die zum ordnungsgemäßen Bearbeiten des Werkstücks erforderliche Menge des explosiven Gasgemisches dosiert wird. Diese Anlage eignet sich besonders für eine Verkettung einer thermischen Entgratanlage mit anderen Werkstück-Bearbeitungsmaschinen in taktmäßig betriebenen Fertigungsstraßen, da die Prüfung des Werkstück- beziehungsweise Materialvolumens jeweils nur wenige Sekunden dauert und die Beschickung vollautomatisch über Transportbänder, Handhabungsgeräte und dergleichen ohne Rücksicht auf das jeweilige Volumen aufeinanderfolgender Werkstücke erfolgen kann.

Durch die in den Unteransprüchen aufgeführten Maßnahmen sind vorteilhafte Weiterbildungen des Hauptanspruchs möglich. Besonders vorteilhaft hinsichtlich eines einfachen und teilesparenden Aufbaus der Anlage ist es, daß als Gas für die Signalfüllung der Bearbeitungskammer mindestens eine Komponente des explosiven Gasgemisches benutzt wird. Weitere Einsparungen lassen sich dadurch erzielen, daß das Gas für die Signalfüllung über den Weg des explosiven Gasgemisches in die Bearbeitungskammer eingelassen wird.

Zeichnung

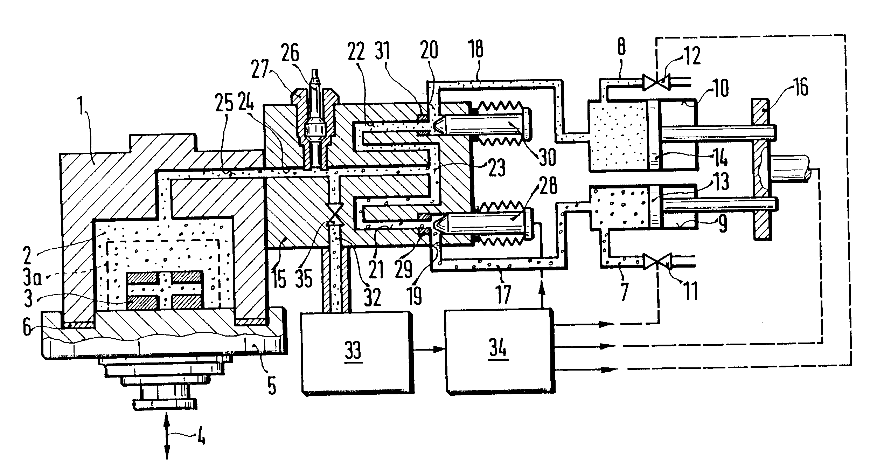

Ein Ausführungsbeispiel der Erfindung ist in der Zeichnung dargestellt und in der nachfolgenden Beschreibung unter Angabe weiterer Vorteile näher erläutert. Die Figur zeigt eine nach dem erfindungsgemäßen Verfahren arbeitende, schematisch dargestellte Anlage zum thermischen Entgraten von Werkstücken mit den zum Verständnis der Erfindung notwendigen Bauelementen.

Beschreibung des Ausführungsbeispiels

In der Figur ist mit 1 eine Werkstückbearbeitungskammer bezeichnet, deren ein vorbestimmtes Volumen aufweisender Brennraum 2 mit Werkstücken unterschiedlichen Volumens beschickt werden kann. Im Brennraum 2 befindet sich ein Werkstück 3 mit relativ kleinem Volumen, während ein Werkstück 3a mit erheblich größerem Volumen in gestrichelten Linien angedeutet ist. Unter der Voraussetzung, daß die Werkstücke 3 und 3a aus dem gleichen Material, beispielsweise aus Stahl, bestehen, benötigt man zum Entgraten des kleineren Werkstücks 3 eine geringere Gasmenge als zum Entgraten des größeren Werkstücks 3a, weil letzteres eine größere Oberfläche und Masse hat als das Werkstück 3.

Die Werkstücke ruhen auf einem in Richtung des Doppelpfeils 4 bewegbaren Schließteller 5, welcher vor dem Füllen des Brennraums 2 mit Gas an die Stirnfläche der nach unten offenen Bearbeitungskammer 1 angelegt wird. Zwischen Teller 5 und Stirnfläche ist eine Dichtung 6 angeordnet.

Die Gaskomponenten des Brenngas-Sauerstoffgemisches werden aus je einem nicht dargestellten Vorratsbehälter über je eine druckfeste Leitung 7 bzw. 8 in einen Dosierzylinder 9 für Brenngas bzw. einen Dosierzylinder 10 für Sauerstoff eingelassen. Die Leitungen 7, 8 enthalten je ein einstellbares Druckreduzierventil 11 bzw. 12. Jeder Zylinder hat einen Gaseinstoßkolben 13 bzw. 14, welcher das Gas in einen Mischblock 15 und von dort in den Brennraum 2 drückt. Die Kolben 13, 14 sind im Ausführungsbeispiel durch ein Joch 16 miteinander gekoppelt, so daß sie unter dem Einfluß einer am Joch 16 angreifenden Kraft Hübe gleicher Größe ausführen. Es sind auch Systeme mit hydraulischer Kopplung der Gaseinstoßkolben bekannt.

Der Dosierzylinder 10 für Sauerstoff hat ein größeres Volumen als der Dosierzylinder 9 für Brenngas, so daß bei gleichem Fülldruck eine größere Sauerstoffmenge vorhanden ist. Als Standardgemisch ist ein Gemisch mit 100 % Sauerstoffüberschuß anzusehen, wobei als Brenngas Wasserstoff oder Erdgas bzw. Methan verwendet wird. Metalle werden in jedem Fall mit einem Sauerstoffüberschuß entgratet, da sonst nur ein Anschmelzen, aber keine Verbrennung der Grate stattfinden würde. Nur bei Kunststoffen wird gelegentlich der oxidationsfreie Schmelzprozeß angewendet.

Von den Dosierzylindern 9, 10 führt je eine druckfeste Leitung 17 bzw. 18 in den Mischblock 15, der aus einem massiven Metallblock besteht. Die Leitungen 17, 18 münden in je eine Anschlußbohrung 19 bzw. 20 im Mischblock 15, an die sich als Bohrungen ausgebildete Gaszuführungsleitungen 21 bzw. 22 anschließen. Die Leitungen 21, 22 führen zu einem Mischraum 23, von welchem eine Leitung 24 abgeht, die das Gasgemisch über eine in der Bearbeitungskammer 1 ausgebildete Bohrung 25 in den Brennraum 2 der Kammer leitet. Zum Zünden des Gasgemisches dient eine in die Gasabführungsleitung 24 hineinragende Zündkerze 26, die in einem Einsatz 27 des Mischblocks 15 sitzt. Anstelle einer Zündkerze kann auch eine Glühkerze oder ein anderer geeigneter Zünder verwendet werden. Zwischen den Bohrungen 19, 21 und 20, 22 befindet sich je ein Ventil 28, 29 bzw. 30, 31. Diese Ventile werden zu Beginn des Gasgemischeinstoßvorgangs geöffnet und nach Abschluß des Einstoßens einer vorgegebenen Gemischmenge wieder geschlossen.

Wie aus der Figur ersichtlich ist, zweigt von der Gasabführungsleitung 24 des Mischblocks 15 eine weitere, als Bohrung ausgebildete Leitung 32 ab. Diese Leitung mündet in einen vorzugsweise elektrisch arbeitenden Druckauswerter 33, der den Druck einer vorgegebenen Gasmenge mißt, welche vor dem Einbringen des zum Entgraten des Werkstücks 3 bzw. 3a dienenden explosiven Gasgemisches in den Brennraum 2 eingelassen wird. Die jeweilige, zum Werkstückvolumen proportionale Druckdifferenz P zwischen dem Anfangsdruck $P_0$, welcher in der Regel dem atmosphärischen Druck entspricht, und dem mit der vorgegebenen Gasmenge erreichten Fülldruck $P_x$ wird von dem Druckauswerter 33 erfaßt und in ein Proportionalsignal umgesetzt. Anhand dieses Signals bestimmt eine dem Druckauswerter 33 nachgeschaltete Steuerstufe 34 die Menge des zum Entgraten des im Brennraum 2 befindlichen Werkstücks benötigten explosiven Gasgemisches.

Die Gasmenge für die Signalfüllung ist in jedem Fall erheblich kleiner als die Menge des für den nachfolgenden Entgratvorgang in den Brennraum 2 einzulassenden explosiven Gasgemisches. Sie kann so bemessen sein, daß sich im Brennraum 2 je nach Volumen des darin befindlichen Werkstücks ein Druck bis z.B. maximal 1 bar aufbaut. Als Gas für die Signalfüllung eignet sich beispielsweise Druckluft, die über eine besondere Leitung in den Mischblock 15 bzw. direkt in den Brennraum 2 der Bearbeitungskammer 1 eingelassen wird. Bevorzugt wird jedoch als Gas für die Signalfüllung eine oder beide Komponenten des Gasgemisches, also Brenngas und/oder Sauerstoff benutzt, die über die Gaseinstoßzylinder 9 bzw. 10 und die Leitungen 17, 19, 21, 24, 25 bzw. 18, 20, 22, 24, 25 in den Brennraum 2 eingelassen werden. Der Einlaß kann mittels der Stufe 34 gesteuert werden, die hierzu einen Auslöseimpuls erhält, der entweder manuell eingegeben wird oder von der Schließbewegung des Tellers 5 abgeleitet ist. Die Zumessung der Gasmenge kann beispielsweise über das Ventil 28, 29 und/oder das Ventil 30, 31 erfolgen. Hierzu wird das Ventil nach Eingabe des Auslöseimpulses durch die Steuerstufe 34 für eine solche Zeitspanne geöffnet, daß bei einem bestimmten durch die Druckreduzierventile 11, 12 vorgegebenen Druck in den Dosierzylindern 9, 10 eine bestimmte Gasmenge in den Brennraum 2 gelangt. Im Ausführungsbeispiel ist vorgesehen, daß als Gas für die Signalfüllung das Brenngas verwendet wird und die Steuerstufe demzufolge mit dem Ventil 28, 29 zusammenarbeitet.

Die vorbestimmte Gasmenge für die Signalfüllung könnte auch ohne Begrenzung der Öffnungszeit der Ventile 28, 29 bzw. 30, 31 durch die Steuerstufe 34 mittels der Kolben 13, 14 in den Brennraum eingestoßen werden. Voraussetzung hierfür ist, daß der durch die Druckreduzierventile 11, 12 bestimmte Fülldruck der Dosierzylinder 9, 10 niedriger ist als der Minimaldruck der Prüfgasmenge im Brennraum 2, da beim Öffnen der Ventile 28, 29 und 30, 31 Druckausgleich im gesamten System entsteht und die Differenzmenge zwischen der nach Druckausgleich im Brennraum befindlichen Istgasmenge und der Sollgasmenge durch einen Kolbenhub 13, 14 eingestoßen wird, dessen Größe durch die Steuerstufe 34 vorgebbar ist.

Der Druck der vorgegebenen Gasmenge im Brennraum 2 liegt bei Werkstücken mit kleinerem Volumen niedriger, bei Werkstücken mit großem Volumen dagegen deutlich höher. Die dadurch bedingte Druckdifferenz zwischen dem konstanten atmosphärischen Anfangsdruck und dem Fülldruck des geschlossenen Brennraums 2 wird von einem Druckaufnehmer des Druckauswerters 33 erfaßt und in ein Proportionalsignal umgesetzt. Mit diesem Signal wird, wie bereits erwähnt, die Steuerstufe 34 beaufschlagt, welche anhand eines Signalparameters, beispielsweise der Größe einer elektrischen Spannung, die Menge des nachfolgend in den Brennraum 2 der Bearbeitungskammer 1 einzubringenden Brenngas-Sauerstoffgemisches bestimmt. Diese ist bei Werkstücken mit kleinem Volumen entsprechend geringer als bei Werkstücken, welche gerade noch in den Brennraum 2 hineinpassen. Zur Bemessung der Gasgemischmenge entsprechend der Größe des ermittelten Signals kann sowohl die Größe des Kolbenhubs als auch die Einstellung der Druckreduzierventile 11, 12 herangezogen werden, über welche sich der Gasdruck in den Zylindern 9, 10 und somit die darin befindliche Gasmenge regulieren läßt. Beide Möglichkeiten sind in der Zeichnung durch gestrichelte Verbindungslinien zwischen drei Ausgängen der Steuerstufe 34 und dem Joch 16 bzw. den Druckreduzierventilen 11, 12 angedeutet.

Die Anlage arbeitet im Prinzip wie folgt:
Ein Werkstück oder ein Topf bzw. ein Halter mit Werkstücken wird auf den abgesenkten Schließteller 5 der geöffneten Werkstückbearbeitungskammer 1 gestellt und deren Brennraum 2 anschließend durch Anheben des Tellers 5 druckdicht verschlossen. Über die Druckreduzierventile 11, 12 wird eine bestimmte Gasmenge (Brenngas und Sauerstoff) mit einem vorgegebenen Druck in die Dosierzylinder 9, 10 eingelassen. Auf ein Auslösesignal hin öffnet die Steuerstufe 34 für eine vorgegebene Zeitspanne das Ventil 28, 29, so daß eine bestimmte Menge Brenngas aus dem Zylinder 9 über die Leitungen 17, 21, 24, 25 in den Brennraum 2 strömt. Darin und in den Leitungen 21, 22, 24, 25, 32 baut sich ein Druck auf, dessen Größe abhängig ist vom Volumen des im Brennraum befindlichen Werkstücks. Der jeweilige Druck wird von dem an die Leitung 32 angeschlossenen Druckauswerter 33 in ein proportionales Signal umgesetzt, welches an die Steuerstufe 34 weitergegeben wird. Abhängig von der Größe des empfangenen Signals bestimmt die Steuerstufe durch entsprechende Einstellung der Dosiervorrichtung die Gasmenge in den Zylindern 9, 10. Dies kann durch Verändern der Zylindervolumen durch entsprechende Einstellung der Kolben 13, 14, durch die Zahl der Kolbenhübe oder durch Verändern des Gasdrucks mittels der Druckreduzierventile 11, 12 erfolgen. Die so festgelegte Gasgemischmenge wird durch die Kolben 13, 14 bei geöffneten Ventilen 28, 29 und 30, 31 über die Leitungen des Mischblocks 15 und der Bearbeitungskammer 1 in den Brennraum 2 geschoben. Im Mischraum 23 werden die beiden Gase (Brenngas und Sauerstoff) miteinander vermischt und nach Beendigung des Füllvorgangs mittels der Zündkerze 26 gezündet. Die Flammfront schreitet dann über die Bohrung 25 zum Brennraum 2 fort. Bei der Explosion tritt im Brennraum kurzzeitig ein Druck bis 700 bar und Temperaturen in der Größenordnung von 3500° C auf. Der Druckauswerter 33 wird durch ein in der Leitung 32 angeordnetes, während des Gasgemischeinstoßes und des Bearbeitungsvorgangs geschlossenes Ventil 35 gegen die auftretenden Temperatur- und Druckstöße geschützt.

Das erfindungsgemäße Verfahren ist gleichermaßen geeignet für thermische Entgratanlagen, die einen separaten, an die Werkstückbearbeitungskammer angeflanschten Mischblock besitzen, als auch für solche, bei denen die Gaskomponenten über getrennte Zuleitungen direkt in die Werkstückbearbeitungskammer eingelassen und erst dort gemischt und nach der Vermischung gezündet werden.

Die Anlage, wie sie in der Figur dargestellt ist, eignet sich nicht nur zum thermischen Entgraten von Werkstücken, sondern ist ebenso für weitere Anwendungsgebiete geeignet. So kann mit einer derartigen Anlage das Verfahren des Retikulierens von Schaumstoff nach DE-Patent 15 04 096 oder das Verfahren zum Entfernen von porösen Formen z.B. nach DE-Patent 23 22 760 durchgeführt werden.

**Patentansprüche**

1. Anlage mit einer Bearbeitungskammer zum Behandeln von Materialien (3 bzw. 3a) mittels Temperatur- und Druckstößen, insbesondere einer thermischen Entgratanlage, in die ein explosives Gasgemisch in Abhängigkeit vom Volumen des in der Kammer (1, 2, 5) befindlichen Materials einzubringen ist, mit einem Mischblock (15) zum Mischen der Komponenten des explosiven Gasgemisches, der mit einer in einen Mischraum (23) mündenden Gaszuführungsleitung (21 bzw. 22) für jede Gaskomponente versehen ist, die an je eine einstellbare Dosiervorrichtung (9, 11, 13 bzw. 10, 12, 14) für die Gasmenge und das Mischungsverhältnis der Gaskomponenten angeschlossen ist, dadurch gekennzeichnet, daß der Mischblock (15) mit einer weiteren, nach außen führenden Leitung (32) versehen ist, welche mit dem Gasvorrat für die Signalfüllung in Verbindung steht, und an welche ein Druckauswerter (33) angeschlossen ist, daß an den Ausgang des Druckauswerters (33) eine Steuerstufe (34) angeschlossen ist, die auf mindestens eine der Dosiervorrichtungen (9, 11, 13 bzw. 10, 12, 14) derart einzuwirken vermag, daß in die mit Material (3 bzw. 3a) beschickte geschlossene Kammer (1, 2, 5) zunächst eine vorgegebene, geringe Menge eines Gases oder Gasgemisches eingelassen und aus der Differenz (P) zwischen Anfangsdruck ($P_0$) und Fülldruck ($P_x$) ein Signal über das Volumen des in der Kammer (1, 2, 5) befindlichen Materials (3 bzw. 3a) gewonnen wird, anhand dessen die Steuerstufe (34) die in die Bearbeitungskammer (1, 2, 5) einzubringende Menge des explosiven Gasgemisches bestimmt.

2. Anlage nach Anspruch 1, dadurch gekennzeichnet, daß die zum Druckauswerter (33) führende Leitung (32) von einer Gasabführungsleitung (24) des Mischblocks (15) abgeht, und daß die Dosiervorrichtungen (9, 11, 13 bzw. 10, 12, 14) je ein zwischen den Gasvorräten der einzelnen Gaskomponenten und dem Mischblock (15) angeordnetes einstellbares Druckreduzierventil (11 bzw. 12) aufweisen, welches an einen Ausgang der Steuerstufe (34) angeschlossen ist.

3. Anlage nach einem der Ansprüche 1 oder 2, dadurch gekennzeichnet, daß die Dosiervorrichtungen (9, 11, 13 bzw. 10, 12, 14) je einen Gaseinstoßkolben (13 bzw. 14) für jede Komponente des explosiven Gasgemisches haben, welche an einen die Größe des Kolbenhubs bestimmenden Ausgang der Steuerstufe (34) angeschlossen sind.

4. Anlage nach Anspruch 1, dadurch gekennzeichnet, daß die Zuführungsleitung (21 bzw. 22) für jede Gaskomponente je ein innerhalb des Mischblocks (15) angeordnetes Einlaßventil (28, 29 bzw. 30, 31) aufweist, welches die Zuführleitung während des Bearbeitungsvorgangs des in der Bearbeitungskammer (1, 2, 5) befindlichen Materials (3 bzw. 3a) verschließt, und daß eine vor dem Bearbeitungsvorgang auslösbare Steuerstufe (34) vorgesehen ist, welche mindestens ein Einlaßventil (28, 29) für eine zum Einlassen des Gases für die Signalfüllung in die Bearbeitungskammer vorgesehene Zeitspanne öffnet.

**Claims**

1. Installation having a processing chamber for treating materials (3 or 3a) by means of temperature and pressure surges, in particular a thermal deburring installation, into which an explosive gas mixture is to be introduced as a function of the volume of the material in the chamber (1, 2, 5), having a mixing block (15) for mixing the components of the explosive gas mixture, which is provided with a gas feed conduit (21 and 22 respectively) for each gas component opening into a mixing space (23) and connected to a respective adjustable metering device (9, 11, 13 and 10, 12, 14) for the quantity of gas and the mixing ratio of the gas components characterised in that the mixing block (15) is provided with a further conduit (32), which leads to the outside and is connected to the gas supply for the signal charge and to which is connected a pressure evaluator (33), in that connected to the output of the pressure evaluator (33) is a control stage (34) which is capable of acting on at least one of the metering devices (9, 11, 13 or 10, 12, 14) in such a way that a predetermined, small quantity of a gas or gas mixture is first of all admitted to the closed chamber (1, 2, 5) charged with material (3 or 3a) and a signal indicating the volume of the material (3 or 3a) in the chamber (1, 2, 5) is obtained from the difference (P) between the initial pressure ($P_0$) and the filling pressure ($P_x$), by means of which signal the control stage (34) determines the quantity of explosive gas mixture to be introduced into the processing chamber (1, 2, 5).

2. Installation according to Claim 1, characterised in that the conduit (32) leading to the pressure evaluator (33) leads off from a gas outlet conduit (24) of the mixing block (15) and in that the metering devices (9, 11, 13 and 10, 12, 14 respectively) each have an adjustable pressure relief valve (11 and 12 respectively) which is arranged between the gas supplies of the individual gas components and the mixing block (15) and is connected to an output of the control stage (34).

3. Installation according to either of Claims 1 or 2, characterised in that the metering devices (9, 11, 13 and 10, 12, 14) each have a gas injection piston (13 and 14 respectively) for each component of the explosive gas mixture, and these pistons are connected to an output of the control stage (34), said output determining the length of the piston stroke.

4. Installation according to Claim 1, characterised in that each feed conduit (21 and 22 respectively) for each gas component has an inlet valve (28, 29 and 30, 31 respectively) which is arranged within the mixing block (15) and closes the feed conduit during the processing operation on the material (3 or 3a) in the processing chamber (1, 2, 5), and in that a control stage (34) which can be triggered before the processing operation is provided, opening at least one inlet valve (28, 29) for a period of time provided to allow admission of the gas for the signal charge in the processing chamber.

**Revendications**

1. Installation comportant une chambre de traitement pour traiter les matériaux (3, 3a) par des chocs de température et de pression, notamment une installation d'ébarbage thermique qui reçoit un mélange gazeux explosif en fonction du volume du matériau placé dans la chambre (1, 2, 5), avec un bloc mélangeur (15) pour mélanger les composants du mélange gazeux explosif, avec des conduites d'alimentation en gaz (21, 22) pour chaque composant gazeux, débouchant dans une chambre de mélange (23), ces conduites étant reliées à un dispositif de dosage réglable (9, 11, 13 ou 10, 12, 14) du mélange gazeux et du rapport de mélange des composants gazeux, installation caractérisée en ce que le bloc mélangeur (15) est muni d'une autre conduite (32) allant à l'extérieur, qui communique avec le réservoir de gaz pour fournir le signal de remplissage, et à laquelle est relié un circuit d'exploitation (33) dont la sortie est reliée à un étage de commande (34) qui peut agir sur au moins l'un des dispositifs de dosage (9, 11, 13 ou 10, 12, 14) de façon que la chambre fermée (1, 2, 5) chargée du matériau (3, 3a) reçoive tout d'abord une quantité faible prédéterminée d'un gaz ou d'un mélange gazeux et partant de la différente (P) entre la pression initiale ($P_0$) et la pression de remplissage ($P_X$), on forme un signal lié au volume du matériau (3, 3a) compris dans la chambre (1, 2, 5), et à l'aide de son étage de commande (34), on détermine la quantité de mélange gazeux explosif que doit recevoir la chambre de traitement (1, 2, 5).

2. Installation selon la revendication 1, caractérisée en ce que la conduite (32) qui est reliée au circuit d'exploitation de pression (33) est issue d'une conduite de sortie de gaz (24) du bloc mélangeur (15) et en ce que les dispositifs de dosage (9, 11, 13 ou b10, 12, 14) comportent chacun une vanne de réduction de pression (11, 12), réglable, prévue entre les réservoirs de gaz des différents composants gazeux et le bloc mélangeur (15), vannes reliées à une sortie de l'étage de commande (34).

3. Installation selon l'une des revendications 1 ou 2, caractérisée en ce que les dispositifs de dosage (9, 11, 13 ou 10, 12, 14) ont chacun un piston d'injection de gaz (13, 14) pour chaque composant du mélange gazeux explosif, pistons qui sont reliés à une sortie de l'étage de commande (34) déterminant l'amplitude de la course de piston.

4. Installation selon la revendication 1, caractérisée en ce que la conduite d'alimentation (21, 22) de chaque composant gazeux comporte une soupape d'admission (28, 29, 30, 31) logée dans le bloc mélangeur (15), conduite qui ferme la conduite d'alimentation pendant l'opération de traitement du matériau (3, 3a) placé dans la chambre de traitement (1, 2, 5) et en ce qu'un étage de commande (34) mis en oeuvre avant l'opération de traitement, ouvre au moins une soupape d'admission (28, 29) pour l'un des gaz à introduire dans la chambre de traitement et servant à former le signal de remplissage, pendant une durée prédéterminée.